# EUROPEAN PATENT APPLICATION

(11) **EP 3 013 095 A1**
(43) Date of publication of application: **27.04.2016**
(21) Application number: 14189490.7
(22) Date of filing: 20.10.2014
(51) Int. Cl.: H04W 28/16

(54) **Resource management in a cloud-based radio access network**

(71) Applicant: FUJITSU LIMITED, Kawasaki-shi, Kanagawa 211-8588 (JP)
(72) Inventor: Li, Zhaojun, Guildford, Surrey GU3 2DJ (GB)
(74) Representative: Stebbing, Timothy Charles

(57) **Abstract**

A cloud-based wireless communication system (1) comprising user devices (12) arranged to receive services through any of a plurality of cloud-based virtual networks. The system has a plurality of base stations or access points (14), a user device (12) being arranged to wirelessly connect to any of the virtual networks via at least one base station (14) in order to receive from a virtual network a specific service for which a user of the user device has subscribed. There are virtual service anchors or vSAs (26) in the cloud, each virtual service anchor provided for a respective service provided by its virtual network. Thus, one vSA (26) handles resource allocation for all users of one service in one virtual network. Each vSA (26) receives content access requests (S10) from user devices (12) indicating content to be accessed in that vSA's service, the content stored by at least one content delivery node in the cloud. The vSA (26), in response to the content access requests, identifies (S12, S14) at least one suitable Content Delivery Node based on the indicated content and base stations proximate to the user device, and transmits service requests (S16, S22). In response to service requests received from multiple vSAs (26), each base station (14) performs second resource allocation, to provide services to each user device (12) wirelessly connected to that base station (14).

## Description

### Field of the Invention

The present invention relates to resource management in wireless networks and more particularly to wireless networks in which at least part of the radio access network (RAN) is implemented via cloud computing, or in other words "in the cloud".

### Background of the Invention

The exponential increase of data rate demands today is tightly coupled with the exponential increase in available storage capacity and processing power, where more processing power requires more storage in order to store the processed data. To meet this demand, cloud computing is a disruptive technology which has changed the development of IT platforms significantly.

NIST (National Institute of Standards and Technology) defines cloud computing as "a model for enabling ubiquitous, convenient, on-demand network access to a shared pool of configurable computing resources (e.g., networks, servers, storage, applications, and services) that can be rapidly provisioned and released with minimal management effort or service provider interaction." The essential characteristics of the cloud computing model are:
(i) on-demand self-service: Any cloud user can self-provision the needed computational resources, through a direct service entry point into the cloud platform, at the time and in the amount best fitting its specific needs, where there is no human assistance and the provisioning is automated;
(ii) broad network access: the computational resources are accessed and used uniquely through a standard network connection (no other types of connection are viable);
(iii) resource pooling: the computational resource pool is unique and shared among all the users, according to a multi-tenancy model. The user has no way to influence the mechanisms according to which the assigned resource location is selected by the platform;
(iv) rapid elasticity: the resources are supposed to be seamlessly scalable to the user, and anyhow must be able to dynamically adapt to the real time demand; and
(v) measured service: the platform must have a metering capability, using abstraction levels peculiar to each provisioned service, supporting monitoring and accounting of resource requests and usage from all the involved consumers.

A conventional mobile network employs dedicated network infrastructure to provide a RAN based on one specific radio access technology (RAT). Within the same geographical area there are typically multiple co-existing RANs based on radio access technologies such as GSM, UMTS and LTE, often together with wireless LANs based on the Wi-Fi group of standards. Base stations or access points of one network are usually of a proprietary nature and incompatible with the other systems, whilst the utilization rate of any one base station may be quite low. Overall capacity is likely to be limited by interference among the RANs, frustrating attempts to meet the ever-increasing demand for wireless data. Although attempts have been made to share hardware among co-existing RANs, the overall scheme is basically non-collaborative, inflexible and wasteful of hardware resources.

Therefore, the possibility is being investigated of leveraging cloud-technology to improve telecommunication networks and address user needs raised by changing traffic demands.

Meanwhile, virtualisation techniques are being proposed to eliminate the dependency between a network function and its hardware, which results in the sharing of the physical hardware by multiple virtual network functions in the form of virtual machines. Further pooling of the hardware might facilitate a massive and agile resource sharing; a phenomenon which is already seen in cloud computing infrastructures.

As part of the Next Generation Mobile Networks (NGMN) project, the so-called Cloud-RAN (C-RAN) has been proposed as a centralised processing, collaborative radio, real-time computing and "clean" (in the sense of a simple architecture) RAN system. Centralised processing allows operators to use the cloud computing paradigm to handle incoming radio traffic in a collaborative manner, enabling higher throughput for the end users.

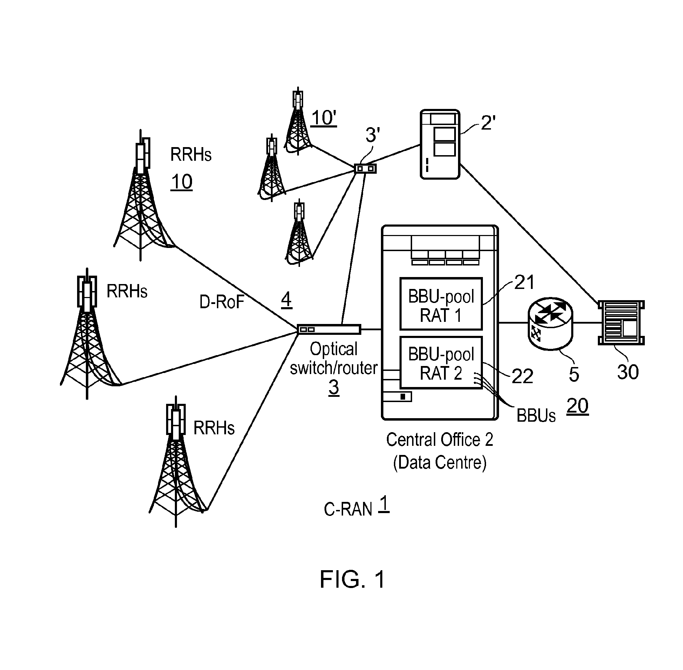

Figure 1 shows a system architecture applicable to C-RAN (incidentally, in this specification the terms "system" and "network" are interchangeable unless demanded otherwise by the context). In this C-RAN 1, the conventional Base Station (BS) of a wireless communication network is split into a Remote Radio Head (RRH) 10 and a Base Band Unit (BBU) 20.

The RRH 10 is a remotely located radio unit and antenna, in charge of the radio functions from the RF transmission and reception with user devices (not shown), to digital baseband and adaptation to the transport network. There may be cluster of RRHs 10 as indicated in Figure 1. Each RRH may provide at least one cell in the wireless communication network and the cluster, therefore, may form a network of overlapping cells in a certain geographical area.

The BBU 20 is the baseband digital processing equipment, composed of high-performance programmable processors and real-time virtualization technology. The BBU 20 carries out any action required at physical layer level (L1) function and congregates Layer 2 and 3 functions (control and management) of a BS. The BBU 20 and the RRH 10 are linked via a high bandwidth and low-latency optical "fronthaul" network which includes one or more optical switch/router 3.

Each BBU is not a standalone unit but rather, as shown in Figure 1 it is provided as a virtual machine, part of a "BBU pool" implemented in a Central Office or Data Centre 2. The Central Office 2 may contain more than one BBU pool, one for each of a plurality of radio access technologies (radio access technologies). Within each Central Office, the respective BBUs (virtual machines) may be tightly interconnected, permitting highspeed of exchange of data. Linkage of BBUs within one RAT pool will generally be tighter than between different pools.

Incidentally, although the BBUs are shown in different pools on a per-RAT basis in Figure 1, this is only one possible arrangement.

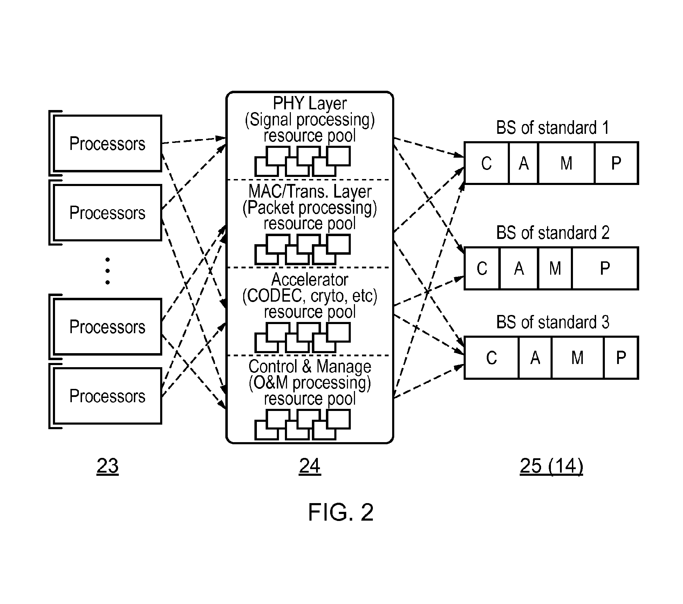

Referring to Figure 2, an alternative concept of virtual machines in a Central Office is shown.

In this example, resource pools 24 are defined at various hierarchical levels of a PHY (physical) layer, a MAC/Trans. (Medium Access Control/Transport) layer, Accelerator layer, and a Control and Management (Operation & Maintenance or O&M) layer. As indicated in Figure 2, the resource pools 24 are formed from the hardware resources of multiple processors 23 of the Central Office. The resource pools at each protocol layer co-operate to define a plurality of (virtual) base stations (BS) 25 as indicated at the right-hand part of the Figure, corresponding to the BBUs in Figure 1. As indicated the base stations may correspond to different standards 1, 2 and 3 - in other words to different radio access technologies. Incidentally, although the base stations are depicted here as each belonging to one RAT, multi-RAT base stations are also possible. Base stations may also combine wireless cellular functions with WLAN capability (Wi-Fi), or unlicensed spectrum used for LTE-based wireless communication (so-called LTE-U), acting as an access point as well as a wireless cellular base station. A further possibility is to employ so-called device-to-device communication (D2D) using LTE spectrum for wireless communication between user devices, supported by a base station.

Referring again to Figure 1, the optical switch/router 3, as well as providing routing to the BBU, permits connection to another region of the network having RRHs 10 coupled to a Central Office 2' via switch/router 3'. The Central Office 2' may serve a different geographical area from that covered by Central Office 2.

Connections of BBUs 20 to other nodes in the cloud are carried over a so-called "backhaul" network. This is - or at least may be thought of as - a broadband Internet connection, using conventional Internet protocols. Each Central Office 2 is connected via the backhaul network to Content Delivery Nodes 30, one of which is shown in the Figure, and in practice other network infrastructure, exemplified by a router 5, will be present.

Radio resource management in such architecture is known to be a non-trivial task, which becomes even more challenging in the context of the Virtual Radio Access Network (V-RAN) where multiple Virtual Network Operators' (VNOs) co-exist on the same physical infrastructure, defining multiple virtual networks.

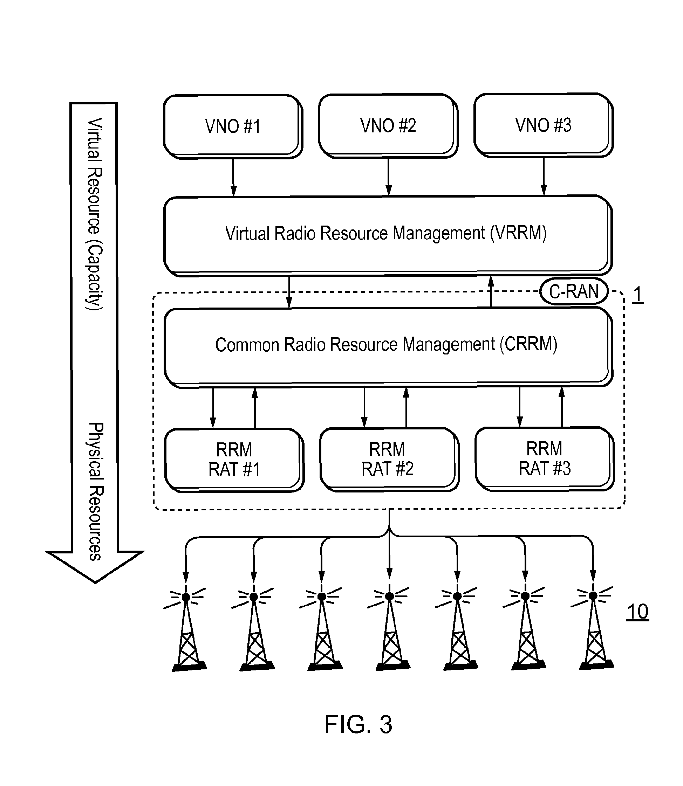

Figure 3 illustrates the management of radio resources in a V-RAN, which as shown is hierarchical, consisting of Virtual Radio Resource Management (VRRM) over Common Radio Resource Management (CRRM) and local RRMs. The hierarchy is shown from top to bottom with the highest-level (most abstracted) functions at the top; the antenna symbols at the bottom in Figure 3 correspond to the RRHs in Figure 1. The RRMs are roughly equivalent to the per-RAT BBU pools in Figure 1.

VNOs, at the highest level of this hierarchy, are network operators who do not own the radio access infrastructure, but share the network resource by arrangement with the infrastructure provider, to provide wireless connectivity to subscribers of the VNOs. In this scheme, VNOs request a certain level of service quality from a virtual resource manager handling the physical infrastructure; this is in addition to quality of service (QoS) requirements of each service session. Such a request may be covered by a Service Level Agreement (SLA) between the virtual operator and the infrastructure provider, and/or may be a request issued dynamically based on current demand.

The VRRM, the highest-level manager, is in charge of translating VNOs' requirements and SLAs into sets of polices for lower levels. The VRRM optimises the usage of virtual radio resources and it does not deal with physical resource. Nevertheless, reports and monitoring information (e.g. estimated remaining capacity) received from CRRM enable it to improve the policies.

CRRM, also called Joint RRM (JRRM), is the intermediate management level between VRRM and local RRMs. CRRM maps the policies of VRRM from virtual resources to physical resources, in addition to issuing policies to manage radio resources in a heterogeneous access environment (heterogeneous in the sense of multiple-RAT). It also optimises the policies based on information from local RRMs, and sends reports to the VRRM.

Local RRMs, in the lowest resource management level, are liable for optimising radio resource usage in a single Radio Access Technology (RAT). They are in charge of assigning physical radio resource parameters (e.g. power, frequency bandwidth, time slots, etc.) to the end-users upon receiving request. The policies issued by the CRRM for each local RRM are used as decision guidelines for that RRM. In addition to policies set by the CRRM, the resource allocation in each local RRM has to meet the QoS requirement of each service, where "service" refers to a specific application being provided to an end user.

To date, virtual networks and the V-RAN concept have shared conventional network infrastructure without employing the principles of cloud computing. On the other hand, the virtualisation provided by C-RAN is a natural fit with the V-RAN concept, allowing resources to be flexibly allocated among the virtual operators in accordance with demand. As the dotted line in Figure 3 shows, at least the RRM function for each RAT, and the CRRM, may be performed by C-RAN 1.

Consider now a cloud based network, where the basic infrastructure is provided by one or more operators, shared by several virtual operators. Basic characteristics of such a network may include:
- Traffic dense area
- Diversity of radio access technologies
- Multi-mode Small Cells (LTE tier and LTE-U/WiFi tier) on the Macro Cell coverage layer

In such a cloud-based network, resources are shared by multiple operators (including virtual operators), which may have different business strategies/focuses and therefore different policies with different customers/subscriber bases. Resource management is essential in order to, for individual virtual operators, guarantee service policies to be enforced; and for the customers/subscribers of individual virtual operators, guarantee the QoS taking into account of the characteristics of the offered services. Meanwhile, from the viewpoint of physical network performance, it is important to maintain high resource utilisation with minimum cost.

In short, the problem requiring a solution is how to efficiently support resource management in a based network.

### Summary of the Invention

According to a first aspect of the present invention, there is provided a method of managing resources in a cloud-based wireless communication system comprising:
defining, from common resources available in the cloud, a plurality of virtual networks, each virtual network offering one or more services and employing any of a plurality of serving stations, to which user devices are wirelessly connected to access a said virtual network;
allowing the user devices to be able receive a specific service by users thereof subscribing to a said virtual network;
in each virtual network, performing first resource allocation for each specific service offered by the virtual network, using the common resources for provisioning the service for all users of the virtual network, and transmitting service requests on the basis of the first resource allocation; and
in each serving station, receiving service requests from each virtual network and in response, performing second resource allocation for providing services to each user device wirelessly connected to the serving station.

Here, "the cloud" refers to hardware resources accessible via the Internet and the physical location of which is unimportant (and indeed may not be apparent to the serving stations or user devices). The serving stations may be common to the virtual networks but are not necessarily (or not necessarily wholly) in "the cloud". At least part of the functions of the serving stations may however be implemented in the cloud; for example a serving station in the form of a base station having separate RRH and BBU as depicted in Figure 1 may have the BBU function located in the cloud.

Each "serving station" may be a base station or access point. Alternatively, or in addition, one or more serving stations may comprise other user devices configured for device-to-device (D2D) communication. As already mentioned such user devices are supported by base stations; therefore in this case it may be appropriate to regard the term "serving station" as covering a user device in combination with its supporting base station.

Allowing user devices to be able to receive a service refers to setting a precondition to making services available, in particular requiring the user to subscribe to a virtual network (and possibly within that virtual network, to one or more service types). Actual delivery of services does not take place until after the first and second resource allocation and these in turn normally depend on a specific request from the user device (see below).

The method preferably provides a respective virtual service anchor for each specific service offered by the virtual network, the virtual service anchor performing the resource allocation for its specific service and transmitting the service requests for its specific service.

Normally, the method is triggered by specific requests for services (content access requests) from user devices. Thus, in a Service Request procedure which is one embodiment of the present invention, the method preferably further comprises each virtual service anchor receiving content access requests from user devices indicating content to be accessed in its specific service, each virtual service anchor performing first resource allocation for its specific service on the basis of the content access requests and preferably also at least one of a predetermined virtual operator policy and a stored user profile.

In this case, preferably, each content access request further comprises measurement reports of the user device with respect to serving stations, and/or location information of the user device. Meanwhile, the service requests transmitted from each virtual service anchor may include a service request to at least one content delivery node holding content indicated in a content access request.

Then, preferably, at least one said content delivery node responds to the service request by notifying the virtual service anchor of a data size of content indicated in the service request. This data size may be of only part of the content requested, if that is all that is available in the content delivery node concerned.

Thereafter the virtual service anchor may calculate an estimated delivery time of the content to the user device based on:
the data size notified by the or each content delivery node;
properties of one or more connections from a content delivery node to a serving station; and
the measurement reports and/or location information of the user device.

In addition, the virtual service anchor may update the estimated delivery time during content delivery.

Here, the "properties of one or more connections" refers to for example, the capacity or latency on a communications link between the content delivery node to the serving station concerned.

In any method as defined above, preferably, the service requests transmitted from each virtual network include service requests to each of one or more serving stations identified as proximate to a user device requiring the specific service. Thus, providing the service to the user device may involve wireless communication of the user device with two or more serving stations simultaneously.

Preferably the service requests to each of one or more serving stations identified as proximate to a user device identify at least one Content Delivery Node and the estimated delivery time. In this way the serving station knows to which node in the network to route requests for data, and an indication can be given to the user device of the expected delay and/or throughput for the content.

Preferably also, each service request to at least one content delivery node includes information on the one or more serving stations identified as proximate to a user device requiring the specific service. The content delivery node may likewise be informed of an expected time (or duration) of content delivery, facilitating load management in the content delivery node.

Then, each of the one or more serving stations, identified as proximate to a user device requiring the specific service, may establish a connection with the or each Content Delivery Node for receiving the content and transmitting the content to the user device. In this way the service is actually provided to the user device.

Another embodiment of the present invention provides a Co-ordinated Data Delivery procedure for a plurality of serving stations. In this case, preferably, each virtual service anchor receives feedback from the user devices, the serving stations and the or each Content Delivery Node, the feedback including at least one of:
from a said user device, status of wireless connections of the user device with proximate serving stations;
from a said serving station, load status of the serving station and/or interference experienced by the serving station; and
from a said Content Delivery Node, load status and/or status of connection with the virtual network.

Then, in the first resource allocation, the virtual service anchor preferably determines a preferred resource scheduling decision for each of a plurality of serving stations proximate to the user device, and transmitting the decision to each serving station concerned. In the second resource allocation, each serving station takes the decision into account, determining an achievable resource scheduling decision (or recommendation) which the serving station then notifies to the virtual service anchor.

A service session is started with the user device by delivering content from one or more content delivery node via at least one serving station to the user device. Preferably, the first and second resource allocation are repeated at intervals during the service session. This can include varying the serving stations employed for data delivery.

Here, preferably, the virtual service anchor notifies the Content Delivery Node of each resource scheduling decision relevant to that Content Delivery Node.

This embodiment preferably further comprises the virtual service anchor revising its preferred resource scheduling decision on the basis of achievable resource scheduling decisions from the serving stations and transmitting the revised decision to each serving station concerned, each serving station repeating the second resource allocation taking the revised decision into account and notifying results to the virtual service anchor.

According to a second aspect of the present invention, there is provided a cloud-based wireless communication system comprising:
user devices arranged to receive services through any of a plurality of virtual networks defined using common resources available in the cloud;
a plurality of serving stations, a said user device being arranged to wirelessly connect to any of the virtual networks via at least one said serving station in order to receive from a said virtual network a specific service for which a user of the user device has subscribed to said virtual network;
virtual service anchors in the virtual networks, each virtual service anchor provided for a respective said service provided by said virtual network, arranged to perform first resource allocation using the common resources, and arranged to transmit service requests on the basis of the first resource allocation; wherein
each serving station is arranged to perform second resource allocation in response to the service requests received from the virtual service anchors, to provide services to each user device wirelessly connected to the serving station.

Here, the virtual service anchors are in the cloud. Whether, and to what extent, serving stations can be said to be "in the cloud" will depend on the implementation; for example a serving station in the form of a user device configured for D2D is not itself in the cloud, but as already mentioned a serving station which is, or which comprises, a base station having a BBU and RRH may have the BBU part in the cloud. Elsewhere in this specification, the term "physical base station" is used to denote that there is at least some part of the base station (such as a RRH) which communicates with user devices over the physical air interface.

Preferably each virtual service anchor is further arranged to receive content access requests from user devices indicating content to be accessed in the respective service, the system further comprising at least one content delivery node, the service requests transmitted from each virtual service anchor including service requests to at least one content delivery node based on the indicated content.

According to a third aspect of the present invention, there is provided a server in a computer network, configured to provide at least one of the virtual service anchors in the system defined above.

According to a fourth aspect of the present invention, there is provided software comprising computer-readable code which, when executed by processors of at least one networked computer and serving station, perform any of the methods defined above.

Thus, embodiments of the present invention can provide a cloud-based wireless communication system, in which user devices are arranged to receive services through any of a plurality of virtual networks defined using common resources in "the cloud". The system has a plurality of base stations (physical base stations or access points), a user device being arranged to wirelessly connect to any of the virtual networks via at least one of the base stations in order to receive, from a virtual network, a specific service for which a user of the user device has subscribed. There are virtual service anchors or vSAs in the cloud, each virtual service anchor provided for a respective service offered by its virtual network. In other words, in each virtual network there are multiple virtual service anchors, one per service (or service type) and covering all users of the service in that virtual network.

Similar to the VRRM mentioned in the introduction, the vSA provides an extra layer of radio resource management on top of conventional RRM. The difference is that vSA is defined on a per-service and per-VNO basis. In addition, the vSA provides a direct logical interface to Content Delivery Nodes which allows the vSA to take into account feedback from Content Delivery Nodes when making scheduling requests.

Embodiments of the present invention are mainly aimed at services involving transmission of content (audio, video, files) to a user device. Examples of such services include video and audio streaming, downloading etc. Each vSA receives, via physical base stations or access points (henceforth denoted pBSs), content access or service requests from user devices indicating content to be accessed in that vSA's service, the content concerned being stored by at least one Content Delivery Node in the cloud. The vSA, in response to the content access requests, identifies at least one relevant Content Delivery Node as well as base stations proximate to each requesting user device. Then the vSA transmits service requests, including service requests to at least one Content Delivery Node based on the indicated content, as well as service requests to the proximate base stations. In response to service requests received from multiple vSAs, each base station performs resource allocation at a local (cell) level, to provide services to each user device wirelessly connected to that base station.

In this way, embodiments of the present invention may provide a multi-level service-centric resource management mechanism in a based virtualised network that is shared by multiple operators including virtual operators (VNOs). There are two levels of resource management in the proposed scheme: a Level 1 resource management at the Service Anchor (vSA), and a Level 2 resource management at the physical base stations or access points (pBSs).

A service request procedure is proposed to allow vSA to identify the suitable pBSs and Content Delivery Nodes for a request raised by a user device of the virtual operator. A coordination scheme is also proposed that enables the vSA to coordinate the data delivery session of a user device among related nodes.

Embodiments of the present invention can optimise the resource management by coordinating the operation of nodes from the application layer (i.e. Content Delivery Node) to the access network layer (i.e. physical base station or access point)

The proposed resource management allows automated coordination which benefits not only the concerned user devices of virtual operators but overall network performance.

### Brief Description of the Drawings

Figure 1 shows a network architecture proposed for a Cloud-based Radio Access Network (C-RAN);
Figure 2 shows levels of resource management in a virtualized RAN, which can include a C-RAN like that of Figure 1;
Figure 3 shows processors of a Central Office providing resource pools for implementing functions of a C-RAN;
Figures 4A and 4B compare a simplified conventional network architecture (Figure 4A) with an architecture proposed in the present invention (Figure 4B);
Figure 5 is a signalling diagram for a service request procedure in an embodiment of the present invention; and
Figure 6 is a signalling diagram for a data delivery session in an embodiment of the present invention.

### Detailed Description

Embodiments of the present invention provide a multi-level service-centric resource management mechanism in a cloud based virtualised network that is shared by multiple operators including virtual operators (VNOs). It is assumed that a virtual network is created for a specific virtual operator. One virtual network comprises one or more virtual service anchors (vSAs), and the coverage footprint and the capacity of the virtual network vary corresponding to the demand of the subscribers of this virtual operator. In principle the coverage footprint of one virtual network could extend to an entire country, in which case the corresponding vSA(s) would be distributed over different geographical areas of the country.

The vSA, a novel concept in the present invention, is service-specific and operator-specific. In other words, one virtual operator can have multiple vSAs, and one vSA belongs to one and only one virtual operator (VNO). Normally there is only one vSA for one service of a given VNO. Examples of "service" here would include Video-on-Demand, music streaming, multimedia broadcast (MBMS), WWW access, and so forthThus, in this context, "service" equates with "service type". Users may subscribe for one or more different kinds of service when they enter a contract with ("subscribe to") the VNO. How many vSAs are provided is partly a question of definition; however, it may be said that using computing, one logical vSA is sufficient for one specific service of a VNO regardless of the geographical area covered.

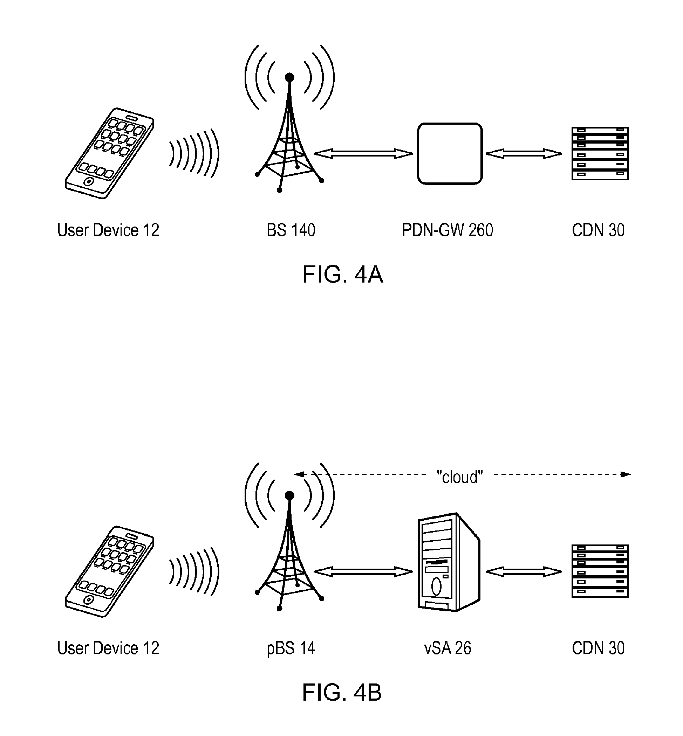

Figures 4A and 4B compare the architecture in the present invention with that of a conventional wireless network such as an LTE-based network.

The conventional wireless network in Figure 4A has a user device 12 wirelessly connecting with a base station 140 which is a standalone, dedicated base station of one specific wireless network. The base station 140 communicates over a dedicated, network-specific backhaul with a PDN-GW 260 which acts as a gateway to the Internet, allowing content to be retrieved from a Content Delivery Node 30. The connection between the PDN-GW and Content Delivery Node 30 may thus a broadband Internet connection; alternatively dedicated backhaul may be used if CDN 30 is managed by the network operator. The PDN-GW 260 may also act as a service anchor for user devices; on the other hand it should be noted that the PDN-GW does not have any resource management function.

As shown in Figure 4B, the architecture proposed for use in the present invention is superficially similar, and the user device and Content Delivery Node are unchanged. However, in this case the physical base station or pBS 14 is (for example) a base station of a virtual network partly implemented in the cloud, for example by the BBU pool shown in Figure 1, and the service anchor is the above mentioned vSA 26. The connection between the virtual network base station 14 and the vSA 26 of that network, may either be via broadband Internet or via dedicated backhaul. Meanwhile the connection from vSA 26 to Content Delivery Node 30 may be made either over broadband Internet (where the Content Delivery Node 30 is located on the Internet) or via a dedicated link (if the Content Delivery Node 30 is proprietary to the operator). The requirement for expensive dedicated backhaul can therefore be reduced.

The vSA differs from prior proposals such as the VRRM shown in Figure 3 in that the VRRM serves all VNOs in a (physical) network, which provides a generic level of radio resource management for all types of services provided by all VNOs. By contrast the vSA proposed here is service specific and VNO specific. Thus, where there are first and second VNOs in a network, both offering similar kinds of service, each would have their own (one or more) vSAs. Due to the differences between these two VNOs' policies, the vSA for the first VNO would take different resource management decisions compared with the vSA for the second VNO.

It can be assumed that each user subscribes for a service in some way, for example by downloading an application program ("app") provided by the VNO. The user (subscriber) initiates a service session by sending a service request from his or her user device. The virtual service anchor is provisioned only when there is at least one service request from the subscriber(s) of this virtual operator. One virtual service anchor may be associated (or linked) with multiple physical base stations or access points of different radio access technologies. One physical base station or access point may be shared by multiple virtual service anchors. Fixed mapping between a virtual service anchor and a physical base station is not necessary.

Relating the above to the BBU pool 21 or 22 discussed in the introduction, the BBU pool is mainly in charge of physical radio resource management, whereas the vSA 26 handles the virtual resource management for a specific service of a specific VNO. In this sense, vSA can be considered as a "higher" layer entity, which interacts with the RRM function provided in a BBU pool or provided in another way. The vSA is a logical entity independent of the BBU pool (if any), even though it may be physically co-located in the same Central Office 2 as the BBU pool 21, 22. For example both may be provided by software running on processors in the cloud, i.e. on a server or in a server farm. Since the vSA 26 is service specific and VNO specific, there is no fixed mapping between vSAs and BBU pools.

It should be noted, however, that although the pBSs may be implemented partly in the cloud as already mentioned, the present invention can also be employed with conventional, "standalone" base stations and/or with user devices configured for D2D.

A virtual service anchor may "follow" the subscribers of the virtual operator. For example, when the subscribers move (e.g. move out of the coverage of a current physical base station associated with the virtual service anchor), the virtual service anchor may associate with different physical base stations or access points to provide sufficient coverage and capacity for the subscribers.

There are two levels of resource management in the proposed scheme:

### (a) Level 1 - at the Service Anchor (vSA 26)

This resource management level is for the subscribers of the virtual operator only, where these subscribers run applications on user devices to obtain services, the resource management taking into account of the application layer characteristics, e.g. the estimated completion time of a session and service class (based on the virtual operator's policy). A key function of this level is to coordinate the involved physical base stations.

### (b) Level 2 - at the physical base station or access point (pBS 14)

This level applies to all the users in the coverage area (cell or range) of the pBS/access point, taking into account the physical link condition of wireless links between pBSs and user devices. Here, resource scheduling decisions are made to meet the requirements from Level 1 resource management component.

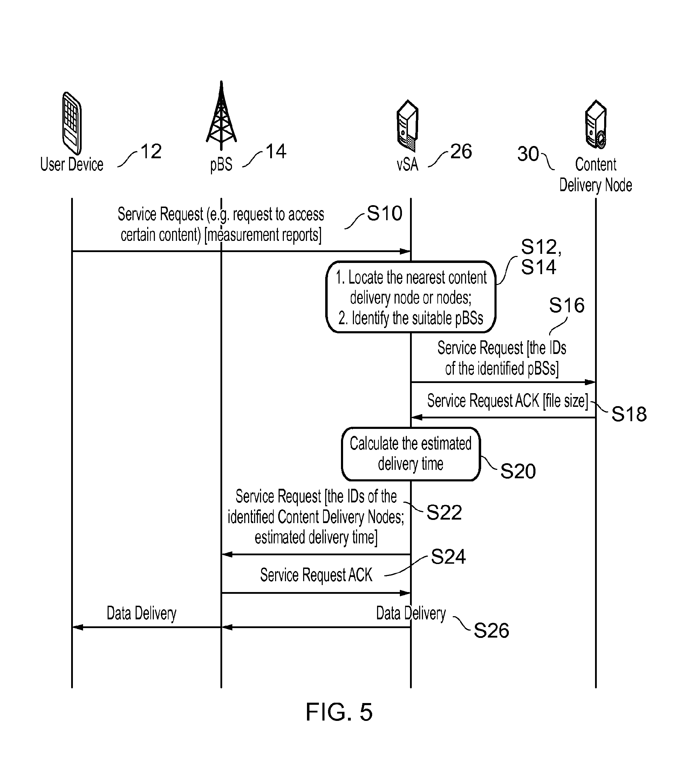

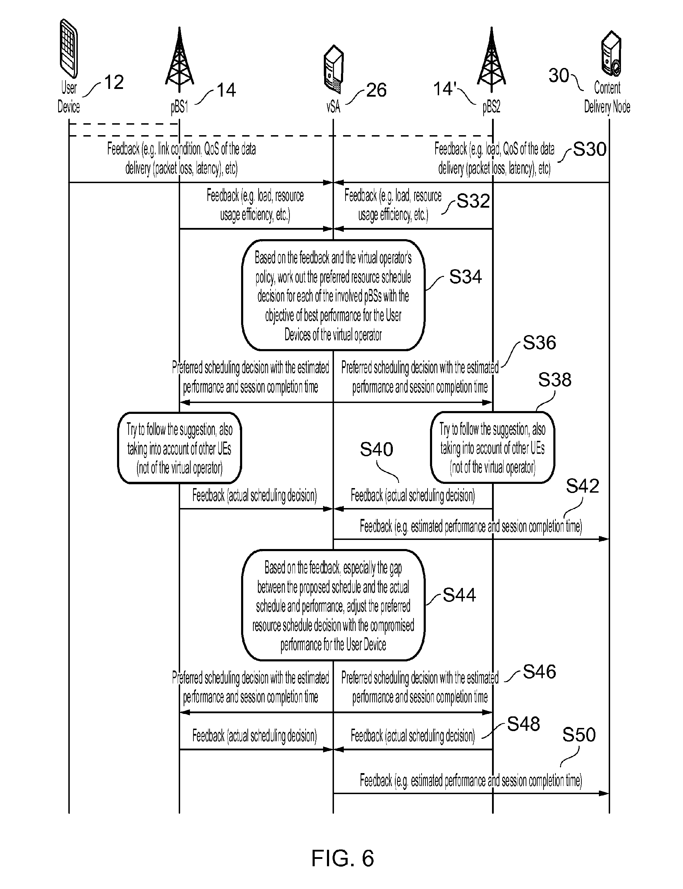

More particularly these levels of resource management provide a service request procedure as shown in Figure 5, and a procedure for conducting a data deliver session as shown in Figure 6.

### Service Request Procedure

In this procedure, a user device 12 of a virtual operator initiates a service request to the vSA 26 of the virtual operator. The user device 12 can be a user equipment of a human user, e.g. mobile phone or tablet or a computer; it can also be a machine type device. By operating the user device, the user causes a Service Request to be generated. The requested service may be a certain content delivery which is part of the services offered by the virtual operator, for example for a particular video stream available from a store of the virtual operator.

All communications from and to the user device are made wirelessly via a base station (physical base station or pBS 14, which may also, or alternatively, be an access point). Usually, service requests from one user device will be directed to one particular base station (normally the closest), but it is possible for the user device to communicate with multiple pBSs.

Figure 5 illustrates an example of the service request procedure, including the following steps.

In an initial step S10, the user device 12, the owner of which is a subscriber of a virtual operator's services, sends a Service Request to the vSA 26 of the virtual operator via the pBS 14, in order to access certain content as part of the service offered by the virtual operator. This Service Request (also referred to as content access request) identifies, implicitly or explicitly, the virtual network providing the service which is the subject of the request. An example of an implicit indication would be a subscriber ID contained in the request and identifying the sender as a subscriber of a specific virtual network. An example of an explicit indication would be if the Service Request is generated using an application program ("app") provided by and specific to the virtual operator. Consequently the pBS knows where to forward the request. The vSA being a higher-level node in the network than a pBS, the pBS forwards the Service Request to the appropriate vSA via the backhaul network.

Measurement reports of the user device 12 may be included in the request, which indicate the quality of the signals received in the neighbouring base stations and access points. The location information of the user device may also be included, if known from a GPS function of the user device for example.

In step S12, upon receipt of the request, the vSA 26 checks the requested content and locates the most suitable Content Delivery Node or Nodes (e.g. nearest nodes available, in the sense of transmission time for example). After that, in S14 the vSA 26 identifies the suitable pBSs for the content delivery session. Determination of suitable pBSs may be based on the measurements and user device's location information, and subscriber's profile and or virtual operator's policy, etc. Normally, one or more pBS proximate to the user device will be chosen. The pBSs can be regarded as common resources available for use of any of the virtual networks.

In S16, the vSA 26 then forwards the request (or a corresponding message generated from the request in the vSA) to the identified Content Delivery Node or Nodes 30 over the backhaul network. The IDs and address information of the identified pBS(s) are included in the message.

In the next step S18, the Content Delivery Node 30 responds with an acknowledgement message, with the file size of the requested content.

In one alternative case, multiple Content Delivery Nodes may be identified for this content delivery session, each of the selected nodes storing part of the requested content. Each of them may respond to the request with the file size of part of the requested content that is stored in this node.

The subsequent steps are described with respect to a single pBS for simplicity. However, it should be noted that it is possible for the vSA to employ a plurality of base stations to deliver the requested content to the user device. Thus "identified pBS" below should be understood as referring possibly to a plurality of base stations.

At S20, upon the receipt of the response from the Content Delivery Node, the vSA 26 calculates the estimated delivery time based on the file size and the link quality of the identified pBS. In case of multiple Content Delivery Nodes, the vSA 26 may calculate the estimated delivery time for the content available in each Content Delivery Node.

The vSA 26 then forwards the request to the identified pBS in step S22. The ID and address information of the identified Content Delivery Node are included in the message, as well as the estimated delivery time for the content available in the Content Delivery Node.

The pBS 14 acknowledges the request in S24. The data delivery path can then be set up from the Content Delivery Node to the pBS, and then to the user device 12, in step S26.

In the case of multiple Content Delivery Nodes, multiple paths may be set up between the pBS and the Content Delivery Nodes. It may be up to the pBS how to deliver the data to the user device 12. Content delivery is direct from the (or each) Content Delivery Node to the pBS; the data does not pass through the virtual service anchor.

The vSA 26 may update the pBS 14 with the estimated delivery time based on the remaining file size and the link quality.

### Coordinated Data Delivery

This procedure is a coordination scheme between vSA 26 and other related nodes for the data delivery session of a user device 12. One example procedure is shown in Figure 6 where, as indicated by the dot-dash lines at the top of the Figure, a user device 12 is engaged in a data delivery session for the content it requests as part of the services offered by the virtual operator, receiving data from two pBSs 14 and 14'.

A vSA 26 is coordinating the data delivery involving the pBSs 14, 14' (also labelled as pBS1 and pBS2) and multiple Content Delivery Nodes 30 (only one shown in this example). During the course of the data delivery session, the network nodes provide feedback to the vSA as indicated by steps S30 and S32. It is assumed that vSA 26 will be updated frequently by the user device 12, pBSs 14, 14' and Content Delivery Nodes 30.

Some examples of feedback include:
- From the user device 12: link conditions with respect to one or more pBS (including the detected interference), QoS of the data delivery, such as packet loss and latency
- From pBSs 14 and 14': load status (or available capacity), resource usage efficiency, detected interference
- From Content Delivery Nodes 30: load status, QoS of the data delivery, such as packet loss and latency

It should be noted that the feedback from the user device 12 is transmitted via pBS 14 in Figure 6. On the other hand, the feedback from Content Delivery Node 30 is transmitted over the backhaul network direct to vSA 26.

In performing resource scheduling (resource allocation) the virtual service anchor follows a policy set by the virtual operator. An example of such a policy can be "to deliver in the most cost-efficient way (i.e. cheapest)". Based on this policy, the vSA may choose, as the pBS to involve in the content delivery, a Wi-Fi access point instead of an LTE base station as long as it can meet the basic QoS requirements, or vSA may instruct the pBS to use most cost efficient technique for the service (e.g. D2D communication, or unlicensed spectrum such as LTE-U).

Based on the feedback information in S30 and S32, and the virtual operator's policy, in step S34 the vSA 26 works out the preferred resource scheduling decision for each involved pBS in order to achieve best performance (e.g. throughput, data rate) for the user device. Then, in step S36 the vSA sends the suggestion to the involved pBSs 14 and 14', together with the estimated performance of the concerned user device and the estimated session completion time for the session.

In S38, upon the receipt of such suggestion, each pBS 14, 14' will assess whether it is possible to follow the preferred scheduling, taking into account the resources available (including choice of RAT with which to communicate with the user device, if applicable). Here the pBS will also take into account other user equipments apart from those subscribed to the virtual operator; and make the scheduling decision (e.g. for the purpose of best overall resource usage efficiency) accordingly. In S40, as part of the feedback procedure each pBS then informs the vSA 26 of an "achievable scheduling decision" which is a resource allocation which the pBS thinks it can deliver on the basis of information available to it, including requests from other vSAs. Thus, it is up to the pBSs to make scheduling decisions (or recommendations) on the basis of possibly conflicting requests from multiple vSAs. In S42, the vSA then updates the Content Delivery Node 30 with the estimated performance and session completion time. Such feedback helps the Content Delivery Nodes to take appropriate action/decisions on resource management and load balancing if necessary.

Based on the information fed back from the pBSs, in S44 the vSA 26 checks the gap/difference, if any, between its own proposed scheduling decision and the achievable decision of each pBS, and identifies the performance difference resulting from the different scheduling decisions. Then if necessary the vSA adjusts the preferred scheduling, either on a per-user basis or collectively for multiple users of the same operator, with the compromised goal (e.g. the second best performance the user device would achieve); this suggestion may have better chance to be accepted by the pBS. One example for an individual user is that the vSA will try to get the best service for a user's service if the VNO's policy is set as the best user experience possible. However, due to the limitation of the available resource in a pBS (e.g. a pBS may have to serve several UEs with high QoS demand), this user might be scheduled with limited resource in the pBS. Based on this feedback, the vSA may lower its scheduling request as a compromise, for example setting a lower data rate which may result in streaming a video at reduced resolution. Thus, the vSA and pBS coordinate to arrive at an acceptable scheduling in the pBS for all users currently served by that pBS.

In step S46 the vSA 26 sends the suggestion (revised scheduling decision) to the involved pBSs 14, 14'. In S50, the vSA 26 further informs the Content Delivery Node 30 of the estimated performance and session completion time.

Each pBS accepts, or at least considers, the revised resource allocation (scheduling decision) from the vSA. Once accepted, content delivery from the Content Delivery Node(s) to the pBS(s) can commence. Although not shown in Figure 6, the above coordination procedure can be repeated to refine the scheduling decision, which results in optimised resource management not only benefitting the concerned user devices of virtual operators but overall network performance.

This can include repeating the scheduling at intervals during content delivery. The timescale for such repetition generally should be greater than the physical layer scheduling interval (e.g. several milliseconds), which may be several seconds and may vary depending on the feedback (e.g. less frequent when the gap/difference between the vSA's proposed scheduling decision and the scheduling achievable in the pBS is sufficiently small). The result of revisiting the scheduling in this way may include involving a further (or different) pBS in the data delivery as loads on individual pBSs or the wireless link conditions change.

Especially in the cases where multiple virtual operators share the same resources, such coordination/negotiation is particularly important to automatically optimise the resource allocation and achieve the optimal and harmonised operating environment.

To summarise, embodiments of the present invention can provide a cloud-based wireless communication system 1 comprising user devices 12 arranged to receive services through any of a plurality of virtual networks defined using common resources which exist at least partly in "the cloud" and which are available to the system. The common resources include a plurality of base stations (physical base stations or access points) 14, a user device 12 being arranged to wirelessly connect to any of the virtual networks via at least one base station 14 in order to receive from a virtual network a specific service for which a user of the user device has subscribed. There are virtual service anchors or vSAs 26 in the virtual networks, each virtual service anchor provided for a respective service provided by its virtual network. Each vSA 26 receives content access requests from user devices 12 indicating content to be accessed in that vSA's service, the content stored by at least one content delivery node in the cloud. The vSA 26, in response to the content access requests, performs first resource allocation using the common resources, this including transmitting service requests to at least one content delivery node based on the indicated content, as well as service requests to base stations 14. In response to service requests received from multiple vSAs 26, each base station 14 performs second resource allocation, to provide services to each user device 12 wirelessly connected to that base station 14.

In this way, embodiments of the present invention can provide a multi-level service-centric management scheme, especially at the service anchor level which represents the subscribers of the corresponding virtual operator only and coordinates the involved physical base stations, taking into account of the application layer characteristics. More particularly embodiments of the present invention provide a multi-level service-centric resource management mechanism in a cloud based virtualised network that is shared by multiple operators including virtual operators.

A service request procedure is proposed to allow a vSA to identify the suitable pBSs and Content Delivery Nodes for a request raised by a user device of the virtual operator. A coordination scheme is also proposed that enables the vSA to coordinate the data delivery session of a user device among related nodes.

Various modifications are possible within the scope of the invention.

Although the architecture described above involves only virtual networks, the present invention can co-exist with dedicated (non-virtual) networks, allowing efficient network sharing by multiple operators including both VNOs and non-VNOs. Users of the dedicated networks need not be provided with a vSA, but providing vSAs for users of at least the virtual networks will improve network usage efficiency whilst guaranteeing QoS for individual users based on VNO's policies.

The above mentioned service request procedure and coordination scheme can be combined, or they may be employed separately.

### Industrial Applicability

Advantages of the invention include, firstly, optimising the resource management by coordinating the operation of nodes from application layer (i.e. Content Delivery Node) to the access network layer (i.e. physical base station or access point). Secondly, the proposed resource management allows automated coordination which benefits not only the concerned user devices of virtual operators but overall network performance.

## Claims

1. A method of managing resources in a cloud-based wireless communication system comprising:
defining, from common resources available in the cloud, a plurality of virtual networks, each virtual network offering one or more services and employing any of a plurality of serving stations, to which user devices are wirelessly connected to access a said virtual network;
allowing the user devices to be able to receive a specific service by users thereof subscribing to a said virtual network;
in each virtual network, performing first resource allocation for each specific service offered by the virtual network, using said common resources for provisioning said service for all users of the virtual network, and transmitting service requests on the basis of said first resource allocation; and
in each serving station, receiving service requests from each virtual network and in response, performing second resource allocation for providing services to each user device wirelessly connected to the serving station.

2. The method according to claim 1 further comprising providing a respective virtual service anchor for each specific service offered by the virtual network, the virtual service anchor performing said resource allocation for its specific service and transmitting said service requests for its specific service.

3. The method according to claim 2 further comprising each virtual service anchor receiving content access requests from user devices indicating content to be accessed in its specific service, each virtual service anchor performing said first resource allocation for its specific service on the basis of: the content access requests and at least one of a predetermined virtual operator policy and a stored user profile.

4. The method according to claim 3 wherein each content access request further comprises measurement reports of the user device with respect to serving stations, and/or location information of the user device.

5. The method according to claim 3 or 4 wherein the service requests transmitted from each virtual service anchor include a service request to at least one content delivery node holding content indicated in a content access request.

6. The method according to claim 5 further comprising at least one said content delivery node responding to the service request by notifying the virtual service anchor of a data size of content indicated in the service request.

7. The method according to claims 4, 5 and 6 in combination, further comprising the virtual service anchor calculating an estimated delivery time of the content to the user device based on:
the data size notified by the or each content delivery node;
properties of one or more connections from a content delivery node to a serving station; and
the measurement reports and/or location information of the user device;
wherein the virtual service anchor updates the estimated delivery time during content delivery.

8. The method according to any preceding claim wherein the service requests transmitted from each virtual network include service requests to each of one or more serving stations identified as proximate to a user device requiring said specific service.

9. The method according to claims 7 and 8 in combination wherein the service requests to each of one or more serving stations identified as proximate to a user device identify at least one Content Delivery Node and the estimated delivery time.

10. The method according to claim 5 and 8 in combination, wherein each service request to at least one content delivery node includes information on the one or more serving stations identified as proximate to a user device requiring said specific service.

11. The method according to claim 9 or 10 further comprising each of the one or more serving stations, identified as proximate to a user device requiring said specific service, establishing a connection with the or each Content Delivery Node for receiving the content and transmitting the content to the user device.

12. The method according to claim 5 further comprising each virtual service anchor receiving feedback from the user devices, the serving stations and the or each Content Delivery Node, the feedback including at least one of:
from a said user device, status of wireless connections of the user device with proximate serving stations;
from a said serving station, load status of the serving station and/or interference experienced by the serving station; and
from a said Content Delivery Node, load status and/or status of connection with the virtual network.

13. The method according to claim 12 further comprising:
in said first resource allocation, the virtual service anchor determining a preferred resource scheduling decision for each of a plurality of serving stations proximate to the user device, and transmitting the decision to each serving station concerned;
in said second resource allocation, each serving station taking said decision into account, determining an achievable resource scheduling decision which the serving station then notifies to the virtual service anchor;
starting a service session of the user device by delivering content from one or more content delivery node via at least one serving station to the user device; and
repeating the first and second resource allocation at intervals during the service session.

14. The method according to claim 13 further comprising the virtual service anchor notifying the Content Delivery Node of each resource scheduling decision relevant to that Content Delivery Node.

15. The method according to claim 13 or 14 further comprising the virtual service anchor revising its preferred resource scheduling decision on the basis of achievable resource scheduling decisions from the serving stations and transmitting the revised decision to each serving station concerned, each serving station repeating the second resource allocation taking said revised decision into account and notifying results to the virtual service anchor.

16. A cloud-based wireless communication system comprising:
user devices arranged to receive services through any of a plurality of virtual networks defined using common resources available in the cloud;
a plurality of serving stations, a said user device being arranged to wirelessly connect to any of the virtual networks via at least one said serving station in order to receive from a said virtual network a specific service for which a user of the user device has subscribed to said virtual network; and
virtual service anchors in the virtual networks, each virtual service anchor provided for a respective said service provided by said virtual network, arranged to perform first resource allocation using said common resources, and arranged to transmit service requests on the basis of said first resource allocation; wherein
each serving station is arranged to perform second resource allocation in response to the service requests received from the virtual service anchors, and to provide services to each user device wirelessly connected to said serving station.

17. The wireless communication system according to claim 16 wherein each virtual service anchor is further arranged to receive content access requests from user devices indicating content to be accessed in the respective service, the system further comprising at least one content delivery node, said service requests transmitted from each virtual service anchor including service requests to at least one content delivery node based on the indicated content.

18. Software comprising computer-readable code which, when executed by processors of at least one networked computer and serving station, perform the method according to any of claims 1 to 15.

## Amended claims

### Amended claims in accordance with Rule 137(2) EPC.

1. A method of managing resources in a wireless communication system (1) formed from a pool of configurable computing resources, the method comprising:
defining, from common resources available in the pool, a plurality of virtual networks of Virtual Network Operators, each Virtual Network Operator sharing the common resources to provide connectivity to subscribers in its virtual network, each virtual network offering one or more services and employing any of a plurality of serving stations (14), to which user devices (12) of the subscribers are wirelessly connected to access the virtual network;
providing multiple virtual service anchors (26) in each virtual network, a respective virtual service anchor being provided for each specific service offered by the virtual network,
allowing the user devices (12) to be able to receive a specific service by users thereof subscribing to a said virtual network;
in the respective virtual service anchor (26) for each specific service offered by each virtual network, performing first resource allocation for the specific service, using said common resources for provisioning said service for all users of the virtual network, and transmitting service requests on the basis of said first resource allocation; and
in each serving station (14), receiving service requests from each virtual network and in response, performing second resource allocation for providing services to each user device (12) wirelessly connected to the serving station.

2. The method according to claim 1 further comprising each virtual service anchor (26) receiving content access requests from user devices (12) indicating content to be accessed in its specific service, each virtual service anchor performing said first resource allocation for its specific service on the basis of: the content access requests and at least one of a predetermined virtual operator policy and a stored user profile.

3. The method according to claim 2 wherein each content access request further comprises measurement reports of the user device (12) with respect to serving stations (14), and/or location information of the user device.

4. The method according to claim 2 or 3 wherein the service requests transmitted from each virtual service anchor (26) include a service request to at least one content delivery node (30) holding content indicated in a content access request.

5. The method according to claim 4 further comprising at least one said content delivery node (30) responding to the service request by notifying the virtual service anchor (26) of a data size of content indicated in the service request.

6. The method according to claims 3, 4 and 5 in combination, further comprising the virtual service anchor (26) calculating an estimated delivery time of the content to the user device (12) based on:
the data size notified by the or each content delivery node (30);
properties of one or more connections from a content delivery node (30) to a serving station (14); and
the measurement reports and/or location information of the user device (12);
wherein the virtual service anchor (26) updates the estimated delivery time during content delivery based on the remaining data size and said properties of the one or more connections.

7. The method according to any preceding claim wherein the service requests transmitted from each virtual network include service requests to each of one or more serving stations (14) identified as proximate to a user device (12) requiring said specific service.

8. The method according to claims 6 and 7 in combination wherein the service requests to each of one or more serving stations (14) identified as proximate to a user device (12) identify at least one content delivery node (30) and the estimated delivery time.

9. The method according to claim 4 and 7 in combination, wherein each service request to at least one content delivery node (30) includes information on the one or more serving stations (14) identified as proximate to a user device requiring said specific service.

10. The method according to claim 8 or 9 further comprising each of the one or more serving stations (14), identified as proximate to a user device (12) requiring said specific service, establishing a connection with the or each content delivery node (30) for receiving the content and transmitting the content to the user device.

11. The method according to claim 4 further comprising each virtual service anchor (26) receiving feedback from the user devices (12), the serving stations (16) and the or each content delivery node (30), the feedback including at least one of:
from a said user device (12), status of wireless connections of the user device with proximate serving stations (14);
from a said serving station (14), load status of the serving station and/or interference experienced by the serving station; and
from a said content delivery node (30), load status and/or status of connection with the virtual network.

12. The method according to claim 11 further comprising:
in said first resource allocation, the virtual service anchor (26) determining a preferred resource scheduling decision for each of a plurality of serving stations (14) proximate to the user device (12), and transmitting the decision to each serving station concerned;
in said second resource allocation, each serving station (14) taking said decision into account, determining an achievable resource scheduling decision which the serving station then notifies to the virtual service anchor (26);
starting a service session of the user device (12) by delivering content from one or more content delivery node (30) via at least one serving station (14) to the user device (12); and
repeating the first and second resource allocation at intervals during the service session.

13. The method according to claim 12 further comprising the virtual service anchor (26) notifying the content delivery node (30) of each resource scheduling decision relevant to that content delivery node.

14. The method according to claim 12 or 13 further comprising the virtual service anchor (26) revising its preferred resource scheduling decision on the basis of achievable resource scheduling decisions from the serving stations (14) and transmitting the revised decision to each serving station concerned, each serving station repeating the second resource allocation taking said revised decision into account and notifying results to the virtual service anchor (26).

15. A wireless communication system formed from a pool of configurable computing resources and comprising:
a plurality of virtual networks of Virtual Network Operators, each Virtual Network Operator sharing common resources available in the pool to provide connectivity to subscribers in its virtual network, each virtual network offering one or more services;
user devices (12) of the subscribers arranged to receive the services through any of the plurality of virtual networks;
a plurality of serving stations (14), a said user device (12) being arranged to wirelessly connect to any of the virtual networks via at least one said serving station in order to receive from a said virtual network a specific service for which a user of the user device has subscribed to said virtual network; and
multiple virtual service anchors (26) in each of the virtual networks, each virtual service anchor provided for a respective said service provided by said virtual network, arranged to perform first resource allocation using said common resources, and arranged to transmit service requests on the basis of said first resource allocation; wherein
each serving station (14) is arranged to perform second resource allocation in response to the service requests received from the virtual service anchors (26), and to provide services to each user device (12) wirelessly connected to said serving station.

16. The wireless communication system according to claim 15 wherein each virtual service anchor (26) is further arranged to receive content access requests from user devices indicating content to be accessed in the respective service, the system further comprising at least one content delivery node (30), said service requests transmitted from each virtual service anchor (26) including service requests to at least one content delivery node based on the indicated content.

17. Software comprising computer-readable code which, when executed by processors of at least one networked computer (26) and serving station (14), perform the method according to any of claims 1 to 14.
